# FASCICULE DE BREVET EUROPEEN

(11) **EP 1 295 056 B1**
(45) Date de publication et mention de la délivrance du brevet: **09.11.2005**
(21) Numéro de dépôt: 00948062.5
(22) Date de dépôt: 30.06.2000
(51) Int. Cl.: F16K 17/38

(54) **SOUPAPE DE SURETE POUR RESERVOIR CONTENANT UN FLUIDE LIQUIDE SOUS PRESSION TEL QUE DU GPL**
SICHERHEITSVENTIL FÜR FLÜSSIGGASDRUCKBEHÄLTER
SAFETY VALVE FOR TANK CONTAINING A PRESSURISED LIQUID FLUID SUCH AS LPG

(43) Date de publication de la demande: 26.03.2003
(73) Titulaire: GIAT Industries, 78000 Versailles (FR)
(72) Inventeur: COMBES, Benoît, F-92150 Suresnes (FR); FOUCHER, Laurent, F-19150 Pandrignes (FR)
(74) Mandataire: Célanie, Christian
(86) Numéro de dépôt international: PCT/FR2000/001840
(87) Numéro de publication internationale: WO 2002/001099

(56) Documents cités:
- EP-A- 0 766 028
- DE-A- 3 618 018
- DE-C- 530 601
- US-A- 3 618 627
- US-A- 5 522 428
- US-A- 5 787 918

## Description

Le secteur technique de la présente invention est celui des dispositifs de sûreté destinés à équiper les réservoirs contenant un fluide liquide sous pression tel que le gaz de pétrole liquéfié (GPL) utilisé comme carburant pour les véhicules à moteurs.

Afin de réduire la pollution liée aux rejets dans l'atmosphère résultant de l'utilisation massive des véhicules automobiles, il est souhaitable de développer la consommation de carburants moins polluants que l'essence ou le fuel.

Les fluides gazeux liquéfiés sous pression, tels que le gaz de pétrole et le gaz naturel, constituent des carburants qui répondent à l'évolution des nouvelles contraintes environnementales.

A titre d'exemple, par rapport à l'essence, le GPL engendre l'émission d'une quantité de dioxyde de carbone inférieure de 40 à 75% et d'une quantité d'hydrocarbures imbrûlés et d'oxyde d'azote inférieure de 30 à 65%. Cette réduction est d'autant plus significative lorsque le véhicule effectue des trajets de courte distance, puisqu'il est bien connu que l'importance des rejets est fonction de la température du moteur.

Il faut également noter que ce carburant GPL présente l'avantage de ne pas contenir d'additifs tels que le plomb, le soufre ou le benzène, dont l'émission est nuisible à la santé des populations.

Les fluides gazeux liquides sous pression sont contenus dans des réservoirs qui supportent des contraintes liées à leur confinement dans des conditions déterminées de température et de pression et à l'évolution possible de leurs propriétés physico-chimiques qui en résultent. En effet, le GPL se trouve en équilibre binaire entre une phase liquide et une phase gazeuse. Cet état peut, sous l'effet de la température, provoquer une élévation importante de la pression interne susceptible d'entraîner l'explosion du réservoir.

C'est la raison pour laquelle, afin d'éviter une éventuelle détérioration du réservoir, on a recours à un limiteur de remplissage. A cette fin, on s'arrange pour que la phase liquide n'occupe que 80% du volume disponible. Les 20% de volume restant au-dessus constituent un ciel gazeux apte à absorber les dilatations de la phase liquide en fonction des variations de la température ambiante.

Si l'on se réfère à la courbe connue de l'évolution du comportement du carburant GPL liquide à l'intérieur d'un réservoir en fonction de la température, on sait que la dilatation de la phase liquide peut augmenter de 21,8% entre 0 et 60°C. Cela signifie que lorsque la phase liquide occupe 80% du volume du réservoir à une température de - 15°C, si celle-ci se dilate, elle peut atteindre 97% du volume lorsque la température est voisine de 50°C.

Cette forte augmentation du volume a pour conséquence de réduire très fortement le ciel gazeux qui ne représente plus alors que 3% du volume. Dans cet état, il ne peut plus absorber la dilatation de la phase liquide. Le réservoir va alors subir des contraintes mécaniques élevées qui peuvent entraîner son explosion. Il existe encore un risque conséquent pour la sécurité, si le limiteur de remplissage n'assure plus sa fonction, en cas de mauvais fonctionnement, car l'utilisateur peut dépasser la limite de remplissage du réservoir. On dit que l'on se trouve dans une situation de plein hydraulique, le ciel gazeux étant quasi inexistant.

On sait également que la tension de vapeur saturante peut conduire également à la destruction du réservoir lorsque la température atteint un seuil critique. Ce phénomène est bien connu, car la pression de vapeur saturante emprisonnée dans un réservoir étanche est fonction de la température ambiante.

Si l'on se réfère aux courbes connues de tension vapeur des carburants GPL en fonction de la température, on sait que la pression croit de manière sensiblement exponentielle en fonction de la température. On constate par exemple que la pression passe de 2.10⁵ Pa à 10°C à 8.10⁵ Pa à 50°C. Il y a donc, en cas de très forte augmentation de la température externe (qui peut se produire notamment lors d'un incendie), un risque que le seuil de pression, qui provoque la rupture du réservoir, soit dépassé et que de ce fait il explose.

Pour répondre à ces contraintes, on a développé des réservoirs, comme ceux décrits dans le brevet WO98/51962, qui présentent des caractéristiques de résistance mécanique accrue. Il est constitué d'un récipient interne étanche et d'une coquille externe qui l'entoure. Celle-ci présente une âme en nid d'abeilles afin de lui conférer des propriétés mécaniques supérieures de résistance aux contraintes tout en lui permettant d'avoir une configuration répondant aux besoins des modèles de véhicules qu'il est destiné à équiper.

L'utilisation de tels réservoirs, bien que parfaitement adaptés pour des usages en condition normale, a montré sa limite lorsqu'ils sont soumis à des contraintes thermiques fortes que l'on rencontre par exemple en cas d'incendie du véhicule.

Plusieurs accidents ont conduit à l'explosion d'un réservoir de véhicule sous l'action de la chaleur, ce qui a causé de sérieux dommages pour les utilisateurs et les secouristes.

C'est la raison pour laquelle pour remédier à ce problème, on a développé des dispositifs de sécurité qui protègent les réservoirs contre le risque d'explosion en cas de surpression.

C'est ainsi que l'on a pensé à placer sur des réservoirs un bouchon obturateur réalisé dans un matériau qui fond dès qu'un seuil prédéterminé de température est atteint. Situé en contact de la phase gazeuse de fluide, il permet, par l'ouverture d'un orifice résultant de sa fonte, la libération du fluide gazeux vers l'extérieur et ainsi une diminution de la pression interne du réservoir.

Bien que simple de conception, ce dispositif présente des inconvénients d'utilisation qui réduisent sa fiabilité.

En effet, lorsque l'on se trouve en plein hydraulique (c'est à dire dans un état où il se produit une forte augmentation de la pression avec une faible variation de la température), le seuil de température permettant la fonte du bouchon obturateur n'est pas atteint, même si la pression peut provoquer la rupture du réservoir. Il en résulte alors un risque d'explosion du réservoir et donc un danger pour les usagers. D'autre part, en cas d'incendie du véhicule, l'expérience a montré que si le feu atteint seulement une partie du réservoir éloignée du bouchon fusible, le réservoir monte en pression sans que le bouchon fonde.

Pour améliorer encore la sécurité, on a songé à disposer sur la partie du réservoir en contact avec la phase gazeuse une soupape de sécurité qui autorise la libération du fluide gazeux sous pression dès qu'un seuil prédéterminé de pression (par exemple de 27.10⁵ Pa (± 1)) est atteint à l'intérieur du réservoir.

Ce dispositif, bien que permettant d'assurer une meilleure sécurité en cas de plein hydraulique, n'assure plus totalement sa fonction de sécurité lors d'une augmentation très rapide de la température qui conduit à une modification localisée des propriétés mécaniques de résistance du réservoir.

Par exemple, lors d'un incendie, une très forte chaleur est répartie ou non sur l'ensemble du réservoir en fonction de la propagation du feu (avec une température qui peut parfois dépasser les 750°C). Ces conditions altèrent et modifient le comportement des matériaux qui constituent le réservoir. Cela se traduit par une fragilisation qui diminue le seuil de rupture. Le réservoir est alors susceptible d'exploser malgré la soupape puisque son seuil de tarage n'est plus adapté.

Il en résulte, dans de telles situations, un danger qui ne permet pas aux secours d'assurer une intervention en toute sécurité.

Les brevets EP-0766028 et DE-3618018 décrivent également une soupape bidirectionnelle munie de deux sorties d'évacuation de fluide indispensables à son fonctionnement. Les soupapes décrites présentent une structure complexe.

Le but de la présente invention est de concevoir une nouvelle soupape de sûreté pour des réservoirs GPL ou à essence apte à assurer la sécurité quelle que soit la cause de l'augmentation de pression, que celle-ci soit localisée en un point du réservoir ou non.

L'invention a donc pour objet une soupape de sûreté pour un réservoir de véhicule destiné à contenir un fluide gazeux sous pression, du type GPL, présentant orifice en contact avec le ciel gazeux à une extrémité et un bouchon à l'autre extrémité, constituée d'un corps creux à l'intérieur duquel se trouve un ressort coopérant à une extrémité avec un clapet de fermeture de l'entrée, un moyen de tarage des contraintes de pression appliquées contre le ressort à son autre extrémité constituée par une vis vissée dans le corps, et un moyen de détarage du ressort constitué d'un matériau fusible thermiquement destructible, la vis est perforée et située au voisinage du bouchon et le moyen de détarage se présente sous la forme d'une rondelle perforée disposée contre la vis, afin de permettre la libération du fluide gazeux sous pression par le couvercle au travers de la vis perforée et de la rondelle perforée.

Selon une caractéristique, le bouchon est éjectable du corps creux sous l'effet de la pression du fluide gazeux.

Selon une autre caractéristique, la rondelle perforée est réalisée en un matériau plastique choisi parmi les polyéthylènes haute densité.

Selon encore une autre caractéristique, la rondelle perforée est réalisée dans un alliage métallique, par exemple du type bismuth/plomb.

Selon encore une autre caractéristique, la soupape comporte un joint d'étanchéité disposé à la base du clapet.

Selon encore une autre caractéristique, la vis perforée comporte un pas de réglage correspondant aux contraintes de pression.

Selon encore une autre caractéristique, la soupape comporte des moyens d'acquisition des données tel un capteur de température qui coopère avec le moyen d'obturation.

Selon encore une autre caractéristique, la soupape comporte des moyens de traitement des données aptes à déterminer l'éjection du moyen d'obturation qui sont reliés à un voyant lumineux situé au niveau du tableau de bord du véhicule.

Avantageusement encore, le moyen de tarage est constitué par une vis perforée vissée dans le corps.

Avantageusement, la soupape comporte un joint d'étanchéité disposé à la base du clapet.

La vis comporte un pas de réglage correspondant aux contraintes de pression.

Un tout premier avantage de cette soupape réside dans le fait que, grâce à sa conception, elle assure une fonction de protection garantissant pleinement la sécurité, mais également une fonction d'indication sur l'état des contraintes subies par le réservoir.

Un autre avantage de la soupape selon l'invention réside dans sa simplicité de réalisation.

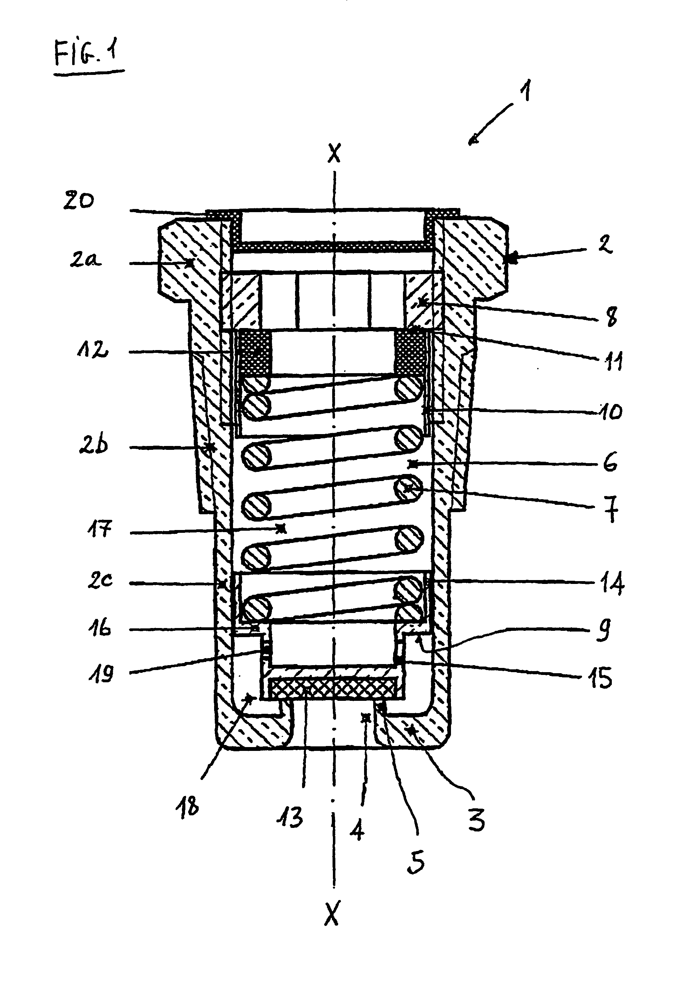

D'autres caractéristiques, détails et avantages de l'invention ressortiront plus clairement à la lecture du complément de description qui va suivre d'un mode de réalisation donné à titre d'exemple, en référence au dessin annexé, sur lequel la figure 1 est une vue en coupe d'une soupape de protection conforme à l'invention.

Sur la figure 1, on a représenté une coupe suivant l'axe longitudinal XX de la soupape 1 constituée d'un corps 2 creux et étanche réalisé dans un matériau lui conférant des propriétés de résistance aux contraintes et sollicitations (corrosion par exemple) auxquelles il sera soumis au cours de son utilisation, par exemple du laiton. Le corps creux 2 se présente sous la forme générale d'un élément tubulaire délimitant extérieurement trois sections 2a, 2b et 2c de diamètre différent. La section 2a présente un certain nombre de pans aux fins de serrage-dans un perçage approprié du réservoir. La section 2b est une partie filetée pour le vissage dans le réservoir. La section 2c est en contact avec le ciel gazeux de GPL. La section 2c se prolonge par une paroi radiale 3 munie d'une perforation 4. La paroi radiale 3 est munie côté interne d'une collerette 5.

Un logement 6, ménagé à l'intérieur du corps 2, reçoit un ressort 7, interposé entre une vis 8 à tête perforée et un clapet 9. Cette vis 8 constitue le moyen de tarage du ressort 7. La tête de la vis 8 est munie d'un prolongement tubulaire 10 dans lequel est engagé le ressort 7 en appui sur un épaulement 11. Le diamètre externe du prolongement 10 est adapté au diamètre interne du logement 6. Une rondelle fusible 12 est interposée entre le ressort 7 et l'épaulement 11 de la vis 8. L'autre extrémité du ressort 7 vient en appui sur le clapet 9 fermant la perforation 4, ce clapet étant lui-même en appui sur la collerette 5. Un joint 13, solidaire du clapet, est disposé entre ce clapet 9 et la collerette 5. Dans sa position de montage sur un réservoir GPL, la soupape 1 fait saillie à l'intérieur de ce réservoir, le joint 13 étant en contact avec le fluide par l'intermédiaire de sa phase gazeuse et éventuellement liquide.

Le clapet 9 se présente sous la forme d'un premier élément tubulaire 14 dont le diamètre externe est adapté au diamètre interne du logement 6 à des fins de guidage du ressort 7 et du clapet lui-même et un second élément tubulaire 15 de diamètre inférieur, réunis entre eux par une paroi radiale 16. Le clapet 9 partage ainsi le logement interne 6 en deux parties isolées l'une de l'autre, une partie 17, dite supérieure, destinée notamment au ressort 7 et une partie 18, dite inférieure, destinée notamment au joint 13. Sur la figure, on voit que le joint 13 est logé à l'extrémité du second élément 15 du clapet et que le ressort 7 est engagé dans le premier élément 14. Le clapet 9 est muni de perçages 19, par exemple au niveau de l'élément 15 permettant la communication entre la partie inférieure 18 et la partie supérieure 17 du corps 2. Enfin, le corps creux est fermé par un bouchon 20 engagé à force dans celui-ci.

En position fermée, comme illustrée sur la figure, le clapet 9 et le joint 13 obturent hermétiquement la perforation 4 afin de bloquer la libération de la phase gazeuse du carburant GPL contenu dans le réservoir (non représenté) et dans lequel la soupape 1 est en contact en position d'utilisation.

La soupape 1 comporte donc un moyen de tarage permettant au ressort 7 de résister à un seuil de pression prédéterminé. Ce moyen est constitué, dans la forme de réalisation représentée, par la vis 8 munie d'un pas permettant d'assurer rapidement le réglage de l'intensité de la contrainte associée au seuil de pression, c'est-à-dire son tarage.

A ce titre, à température ambiante, on choisit une contrainte du ressort 7 correspondant à une pression interne de 27.10⁵ Pa (± 1) pour être conforme aux normes actuelles concernant les réservoirs GPL.

A l'intérieur du corps 2, la rondelle 12 constitue un moyen de détarage fusible qui par sa fusion réduit la contrainte exercée par le ressort, pour permettre la libération du fluide gazeux dans certaines conditions, comme cela sera décrit ultérieurement.

Cette rondelle 12 est réalisée dans une matière qui fond sous l'effet de la chaleur dès qu'un certain seuil est atteint.

De préférence il s'agit d'une matière plastique choisie parmi les polyéthylènes haute densité ou un alliage métallique, tel que celui réalisé à partir du plomb et du bismuth.

On choisit les caractéristiques physico-chimiques de ces matériaux de manière à ce qu'elles soient adaptées aux contraintes liées aux conditions d'utilisation. Notamment, on utilise des matériaux qui doivent changer d'état et fondre lorsqu'on atteint un seuil prédéterminé dans une plage de température donnée.

Cette caractéristique est très importante car elle provoque le détarage du ressort 7 dès que la température atteint le seuil critique fixé. C'est la situation que l'on rencontre notamment en cas d'incendie du véhicule. Sous l'effet de la chaleur, la rondelle 12 fond et entraîne une modification du tarage du ressort 7 de la soupape 1. On assure ainsi l'évacuation du fluide gazeux sous pression qui provoque l'éjection du bouchon 20. L'intégrité physique du réservoir est préservée et le risque d'explosion annulé même en cas d'augmentation localisée très importante de la température. Grâce à la soupape selon l'invention, la sécurité des personnels assurant les secours se trouve ainsi assurée.

Le fonctionnement est le suivant. Le ressort 7 étant taré à la valeur conventionnelle maintient le clapet 9 et donc le joint 13 contre la collerette 5 pour assurer l'étanchéité. Lorsque la pression augmente à l'intérieur du réservoir et atteint un seuil prédéterminé, le ressort 7 est comprimé et le carburant GPL passe de la partie inférieure 18 à la partie supérieure 17 à travers les perçages 19. La pression du GPL entraîne alors l'éjection du bouchon 20 et le GPL est évacué vers l'extérieur en l'absence de fusion de la rondelle 12. Si le véhicule prend feu, alors la rondelle 12 fond, ce qui provoque un-détarage du ressort 7. La pression nécessaire à l'évacuation du GPL est donc moindre et autorise l'évacuation continue de ce fluide vers l'extérieur la membrane après éjection du bouchon.

Un avantage également procuré par l'invention réside dans le rôle joué par le bouchon 20 lorsque l'on se trouve dans un état de plein hydraulique (c'est à dire lorsqu'il y a une forte augmentation de pression à l'intérieur du réservoir sans variation importante de la température).

La pression exercée au niveau de la soupape 1 va conduire à l'ouverture du clapet 9, ce qui va permettre au gaz de traverser par l'orifice 4. Il va alors exercer sur le bouchon 20 une pression qui conduit à son éjection et il pourra ainsi s'échapper par l'orifice de la vis perforée 8 vers l'extérieur du réservoir.

Non seulement, on évite les risques de destruction par explosion du réservoir, mais il est également possible de détecter, lorsque le bouchon est absent, qu'une pression supérieure à 27.10⁵ Pa a été dépassée à l'intérieur de celui-ci. On pourra alors prendre les mesures adaptées afin d'éviter que de telles contraintes ne puissent se reproduire.

Dans une variante de réalisation, il est envisageable de disposer des moyens d'acquisition de données tel qu'un capteur de température. On peut par exemple avoir recours à un thermocouple qui sera connecté à un organe de régulation qui assurera l'ouverture d'un cache amovible ou de tout autre dispositif susceptible d'assurer une obturation amovible du corps creux.

On peut également envisager de placer des moyens de détection de l'éjection du bouchon 20 constitués d'un capteur, tel qu'un capteur de type inductif, qui sera connecté à un voyant lumineux ou une alarme sonore disposé sur le tableau de bord du véhicule pour permettre à l'usager de connaître l'état du réservoir.

## Revendications

1. Soupape de sûreté (1) pour un réservoir de véhicule destiné à contenir un fluide gazeux sous pression, du type GPL, présentant orifice (4) en contact avec le ciel gazeux à une extrémité et un bouchon (20) à l'autre extrémité, constituée d'un corps creux (2) à l'intérieur duquel se trouve un ressort (7) coopérant à une extrémité avec un clapet (9) de fermeture de l'entrée (4), un moyen de tarage (8) des contraintes de pression appliquées contre le ressort (7) à son autre extrémité constituée par une vis (8) vissée dans le corps (2), et un moyen de détarage (12) du ressort constitué d'un matériau fusible thermiquement destructible, la vis (8) est perforée et située au voisinage du bouchon (20) et le moyen de détarage (12) se présente sous la forme d'une rondelle perforée (12) disposée contre la vis (8), afin de permettre la libération du fluide gazeux sous pression par le couvercle au travers de la vis perforée (8) et de la rondelle perforée (12).

2. Soupape de sûreté (1) selon la revendication 1, **caractérisée en ce** le bouchon (20) est éjectable du corps creux (2) sous l'effet de la pression du fluide gazeux.

3. Soupape de sûreté (1) selon la revendication 1 ou 2, **caractérisée en ce que** la rondelle perforée (12) est réalisée en un matériau plastique choisi parmi les polyéthylènes haute densité.

4. Soupape de sûreté (1) selon l'une quelconque des revendications précédentes, **caractérisée en ce que** la rondelle perforée (12) est réalisée dans un alliage métallique, par exemple du type bismuth/plomb.

5. Soupape de sûreté (1) selon l'une quelconque des revendications précédentes, **caractérisée en ce qu'**elle comporte un joint d'étanchéité (13) disposé à la base du clapet (9).

6. Soupape de sûreté (1) selon l'une quelconque des revendications précédentes, **caractérisée en ce que** la vis perforée (8) comporte un pas de réglage correspondant aux contraintes de pression.

7. Soupape de sûreté (1) selon l'une quelconque des revendications précédentes, **caractérisée en ce qu'**elle comporte des moyens d'acquisition des données tel un capteur de température qui coopère avec le moyen d'obturation (20).

8. Soupape de sûreté (1) selon l'une quelconque des revendications précédentes, **caractérisée en ce qu'**elle comporte des moyens de traitement des données aptes à déterminer l'éjection du moyen d'obturation qui sont reliés à un voyant lumineux situé au niveau du tableau de bord du véhicule.

## Patentansprüche

1. Sicherheitsventil (1) für einen Fahrzeugtank, der dafür vorgesehen ist, ein unter Druck stehendes gasförmiges Fluid, vom Typ LPG, zu enthalten, der eine mit der Gasdecke in Kontakt stehende Öffnung (4) an einem Ende und einen Stopfen (20) am anderen Ende aufweist, das von einem hohlen Körper (2), in dessen Inneren sich eine Feder (7) befindet, die an einem Ende mit einer Verschluss-Ventilklappe (9) des Eingangs (4) zusammenwirkt, einem Mittel (8) zum Abgleichen der auf die Feder (7) ausgeübten Druckbelastungen an ihrem anderen Ende, das von einer in den Körper (2) eingeschraubten Schraube (8) gebildet wird, und einem Mittel (12) zur Entlastung der Feder gebildet wird, das von einem thermisch schmelzbaren, zerstörbaren Material gebildet wird, wobei die Schraube (8) perforiert und in der Nähe des Stopfens (20) angeordnet ist und das Mittel (12) zur Entlastung sich in Form einer durchlöcherten Scheibe (12) aufweist, die gegen die Schraube (8) angelegt ist, um die Freisetzung von unter Druck stehendem gasförmigen Fluid durch den Deckel durch die durchlöcherte Schraube (8) und die durchlöcherte Scheibe (12) hindurch zu ermöglichen.

2. Sicherheitsventil (1) nach Anspruch 1, **dadurch gekennzeichnet, dass** der Stopfen (20) des hohlen Körpers (2) unter der Einwirkung des Drucks des gasförmigen Fluids auswerfbar ist.

3. Sicherheitsventil (1) nach Anspruch 1 oder 2, **dadurch gekennzeichnet, dass** die durchlöcherte Scheibe (12) aus einem Kunststoff hergestellt ist, der aus Polyethylenen mit hoher Dichte ausgewählt wird.

4. Sicherheitsventil (1) nach irgendeinem der vorhergehenden Ansprüche, **dadurch gekennzeichnet, dass** die durchlöcherte Scheibe (12) aus einer Metalllegierung hergestellt ist, zum Beispiel von der Art Wismut/Blei.

5. Sicherheitsventil (1) nach irgendeinem der vorhergehenden Ansprüche, **dadurch gekennzeichnet, dass** es eine Dichtung (13) umfasst, die am Fuß der Ventilklappe (9) angeordnet ist.

6. Sicherheitsventil (1) nach irgendeinem der vorhergehenden Ansprüche, **dadurch gekennzeichnet, dass** die durchlöcherte Schraube (8) eine Abgleichsteigung umfasst, die den Druckbelastungen entspricht.

7. Sicherheitsventil (1) nach irgendeinem der vorhergehenden Ansprüche, **dadurch gekennzeichnet, dass** es Mittel zur Datenerfassung umfasst, wie einen Temperatursensor, der mit dem Verschlussmittel (20) zusammenwirkt.

8. Sicherheitsventil (1) nach irgendeinem der vorhergehenden Ansprüche, **dadurch gekennzeichnet, dass** es Mittel zur Datenverarbeitung umfasst, die geeignet sind, den Auswurf des Verschlussmittels zu bestimmen, die mit einer Kontrolllampe verbunden sind, welche im Bereich des Armaturenbrettes des Fahrzeuges angeordnet ist.

## Claims

1. A safety valve (1) for the tank of a vehicle intended to contain a pressurised gaseous fluid, such as LPG, that has an opening (4) in contact with the expansion space at one end and a plug (20) at the other end, constituted by a hollow body (2) inside which there is a spring (7) cooperating on one end with an inlet (4) check valve (9), loading means (8) for the pressure stresses applied to the spring (7) at its other end constituted by a screw (8) screwed into the body (2), and unloading means (12) for the spring constituted by a fusible material that can be destroyed by heat, the screw (8) being perforated and located near to the plug (20) and the unloading means (12) being in the form of a perforated washer (12) placed against the screw (8) so as to permit the release of pressurised gaseous fluid via the cover through the perforated screw (8) and washer (12).

2. Safety valve (1) according to Claim 1, wherein the plug (20) is ejected from the hollow body (2) under the effect of the gaseous fluid's pressure.

3. Safety valve (1) according to one of Claims 1 or 2, wherein the perforated washer (12) is made of a plastic material selected from among the high density polyethylenes.

4. Safety valve (1) according to any one of the above Claims, wherein the perforated washer (12) is made of a metallic alloy, for example of the bismuth/lead type.

5. Safety valve (1) according to any one of the above Claims, wherein it incorporates a sealing ring (13) positioned at the base of the check valve (9).

6. Safety valve (1) according to any one of the above Claims, wherein the perforated screw (8) incorporates a setting pitch corresponding to the pressure stresses.

7. Safety valve (1) according to any one of the above Claims, wherein it incorporates data acquisition means, such as a temperature sensor cooperating with obturation means (20).

8. Safety valve (1) according to any one of the above Claims, wherein it incorporates data processing means able to determine if the obturation means have been ejected and which are connected to a warning light located on the vehicle's dashboard.
